# EUROPEAN PATENT APPLICATION

(11) **EP 4 842 010 A1**
(43) Date of publication of application: **18.11.2026**
(21) Application number: 24919756.7
(22) Date of filing: 24.09.2024
(51) Int. Cl.: H04R 1/08

(54) **ELECTRONIC DEVICE**

(30) Priority: 26.01.2024 CN 202420207676 U
(71) Applicant: Huawei Technologies Co., Ltd., Shenzhen, Guangdong 518129 (CN)
(72) Inventor: XU, Yan, Shenzhen, Guangdong 518129 (CN); WEI, Tao, Shenzhen, Guangdong 518129 (CN); WANG, Liangjie, Shenzhen, Guangdong 518129 (CN); ZHU, Zhibin, Shenzhen, Guangdong 518129 (CN); LI, Zhihai, Shenzhen, Guangdong 518129 (CN)
(74) Representative: Maiwald GmbH
(86) International application number: PCT/CN2024/120556
(87) International publication number: WO 2025/156676

(57) **Abstract**

An electronic device is provided, including a housing and a functional component, where the functional component is connected to the housing, a channel is provided in the electronic device, and one end of the channel runs through a side of the electronic device. At least a portion of the housing constitutes at least a portion of an inner wall of the channel, and at least a portion of the functional component constitutes at least a portion of the inner wall of the channel. A nano hydrophobic film is disposed on the inner wall of the channel, and a thickness of the nano hydrophobic film on the functional component is less than a thickness of the nano hydrophobic film on the housing. In this application, the thickness of the nano hydrophobic film on the functional component may be less than the thickness of the nano hydrophobic film on the housing. This can isolate a part that is of the functional component and that is sensitive to external liquid from the liquid by using the nano hydrophobic film, and prevent performance of the functional component from being affected by the nano hydrophobic film.

## Description

The present invention claims priority to Chinese Patent Application No. 202420207676.7, filed with the China National Intellectual Property Administration on January 26, 2024 and entitled "ELECTRONIC DEVICE", which is incorporated herein by reference in its entirety.

### TECHNICAL FIELD

This application relates to the field of electronic product technologies, and specifically, to an electronic device.

### BACKGROUND

An electronic device like a mobile phone has devices that are sensitive to external liquid, such as a microphone, a speaker, and a display module. The electronic device usually has a sound pickup hole, a fit clearance, and the like. The external liquid enters the electronic device through the sound pickup hole, the fit clearance, and the like and is in contact with the foregoing devices. These devices may easily malfunction upon exposure to liquid like water or household grease. In the conventional technology, a waterproof and breathable material is usually added to the sound pickup hole and the clearance to implement a waterproof function. However, it is difficult to adequately block moisture and impurities by using the waterproof and breathable material, resulting in poor effect.

### SUMMARY

In view of this, this application provides an electronic device, to resolve a problem in the conventional technology that it is difficult to adequately block, by using a waterproof and breathable material, moisture and impurities from entering an electronic device.

This application provides an electronic device, including a housing and a functional component, where the functional component is connected to the housing, a channel is provided in the electronic device, and one end of the channel runs through a side of the electronic device. At least a portion of the housing constitutes at least a portion of an inner wall of the channel, and at least a portion of the functional component constitutes at least a portion of the inner wall of the channel. A nano hydrophobic film is disposed on the inner wall of the channel, and a thickness of the nano hydrophobic film on the functional component is less than a thickness of the nano hydrophobic film on the housing.

In this application, the thickness of the nano hydrophobic film on the functional component may be less than the thickness of the nano hydrophobic film on the housing. This can isolate a part that is of the functional component and that is sensitive to external liquid from the liquid by using the nano hydrophobic film, and prevent performance of the functional component from being affected by the nano hydrophobic film.

In a possible implementation, the channel includes an inner side surface and a bottom surface. The functional component is disposed on a side of the channel in a direction in which the channel runs through the electronic device. At least a portion of the functional component is the bottom surface. A first hydrophobic film layer is disposed on the bottom surface, a second hydrophobic film layer is disposed on the inner side surface, and a thickness of the second hydrophobic film layer is greater than a thickness of the first hydrophobic film layer. The thickness of the first hydrophobic film layer on the functional component is small, so that liquid can be isolated, and it can be ensured that the functional component can operate normally.

In a possible implementation, the thickness of the first hydrophobic film layer is greater than or equal to 10 nm, and the thickness of the second hydrophobic film layer is greater than or equal to 30 nm. That is, the thickness of the nano hydrophobic film on the inner wall of the channel is different, and the thickness of the nano hydrophobic film on the functional component away from an opening of the channel is small, so that a film layer of at least 10 nm can be formed. Therefore, liquid can be isolated, and it can be ensured that the functional component can operate normally. The nano hydrophobic film beyond the functional component has a large thickness, for example, at least 30 nm, and may have a good protection function.

In a possible implementation, the channel is provided in a side wall of the housing, and the second hydrophobic film layer in the channel continuously extends and covers at least a portion of a surface that is of the housing and that is away from the functional component. The nano hydrophobic film on the inner side surface and the bottom surface of the channel may be continuously formed, and the nano hydrophobic film on the inner side surface of the channel may continuously extend to an outer surface of the housing. There is also an included angle between the nano hydrophobic film on the outer surface and the nano hydrophobic film on the inner side surface of the channel, so that the nano hydrophobic film that continuously extends to the outer surface of the housing can block an edge of the channel. Therefore, liquid can be prevented from permeating into the functional component from a part between the inner side surface of the channel and the nano hydrophobic film on the inner side surface of the channel.

In a possible implementation, the functional component includes a primary microphone assembly and a waterproof and breathable film. One surface of the waterproof and breathable film abuts against the primary microphone assembly, and the other surface that is of the waterproof and breathable film and that is away from the primary microphone assembly abuts against the housing and is configured to seal an end that is of the channel and that faces the primary microphone assembly. The nano hydrophobic film is disposed on a surface that is of the waterproof and breathable film and that is configured to seal the channel. The waterproof and breathable film has both a waterproof function and a breathable function, and can prevent most liquid from penetrating into a side at which the functional component is located. The housing may be a middle frame, and the channel may be a sound pickup channel of a primary microphone. The sound pickup channel is provided in a side wall of the middle frame, and is configured to propagate sound. One end of the sound pickup channel has an opening. That is, one end of the sound pickup channel runs through the middle frame, and the other end that is of the sound pickup channel and that is away from the opening is aligned with the primary microphone in position. The sound pickup channel may be a regular straight-line-shaped channel, an irregular "Z"-shaped channel, or the like. The continuous nano hydrophobic film may be disposed on both the inner side surface of the sound pickup channel and the surface that is of the waterproof and breathable film and that is away from the primary microphone. The nano hydrophobic film on the inner side surface of the sound pickup channel may alternatively continuously extend to an outer surface of the middle frame. The nano hydrophobic film can adequately isolate liquid, thereby protecting the functional component from a failure due to being in contact with the liquid. A thickness of the nano hydrophobic film on the surface of the middle frame and a thickness of the nano hydrophobic film on the inner side surface of the channel may be both greater than the thickness of the nano hydrophobic film on the functional component, so that a good protection function can be obtained by using the nano hydrophobic film, and performance of the functional component can be prevented from being affected by an excessively large thickness of the nano hydrophobic film.

In a possible implementation, the nano hydrophobic film is disposed on a surface that is of the waterproof and breathable film and that faces the primary microphone assembly. The nano hydrophobic film may also be disposed on the surface that is of the waterproof and breathable film and that faces the primary microphone assembly, so that the liquid can be more reliably isolated, and a failure of the functional component caused by contact between the liquid and the functional component can be prevented.

In a possible implementation, the channel is provided in the housing, and the channel runs through the housing in a thickness direction of the electronic device. The functional component includes a first optical cover plate, a secondary microphone assembly, and a waterproof and breathable film. The first optical cover plate is disposed on a side of the housing in the thickness direction of the electronic device. At least a portion of a projection of the first optical cover plate coincides with at least a portion of a projection of the channel, and a first gap exists between the first optical cover plate and at least a portion of an edge of the channel. The nano hydrophobic film in the channel continuously extends through the first gap and covers a surface of the housing on a side close to the first optical cover plate. A first film-covered region is provided on a surface that is of the first optical cover plate and that faces the channel, a second film-covered region is provided on a side surface of the first optical cover plate, and a third film-covered region is provided on a surface that is of the first optical cover plate and that is away from the housing. A projection of the first film-covered region, a projection of the second film-covered region, and a projection of the third film-covered region separately coincide or at least partially coincide with the projection of the channel in the thickness direction of the electronic device. The nano hydrophobic film is disposed on each of the first film-covered region, the second film-covered region, and the third film-covered region. The secondary microphone assembly and the waterproof and breathable film are disposed on a side that is of the housing and that is away from the first optical cover plate. One surface of the waterproof and breathable film abuts against the secondary microphone assembly, and the other surface that is of the waterproof and breathable film and that is away from the secondary microphone assembly abuts against the housing and is configured to seal an end that is of the channel and that is away from the first optical cover plate. The nano hydrophobic film is disposed on a surface that is of the waterproof and breathable film and that is configured to seal the channel. The nano hydrophobic film on the first film-covered region, the second film-covered region, and the third film-covered region may separately cover a portion of a surface that is of the first optical cover plate and that is close to the channel. This can prevent liquid from being attached to a position that is on the first optical cover plate and that is close to the channel, and helps prevent the liquid from entering the channel. In addition, the first optical cover plate has a high-gloss appearance. The nano hydrophobic film is disposed on the first optical cover plate, so that liquid attachment to optical glass can be prevented, thereby enhancing aesthetic appeal of the first optical cover plate.

In a possible implementation, an anti-fingerprint layer is disposed on a surface that is of the first optical cover plate and that is away from the housing, and at least a portion of the anti-fingerprint layer is the third film-covered region. The anti-fingerprint layer may cover the entire surface of the first optical cover plate, and has functions such as water resistance, oil resistance, stain resistance, and prevention of fingerprint attachment. The nano hydrophobic film is disposed on the third film-covered region of the anti-fingerprint layer on a side away from the housing, so that fingerprint resistance of the surface of the first optical cover plate can be improved without damaging quality of the anti-fingerprint layer.

In a possible implementation, a thickness of the nano hydrophobic film on the third film-covered region is less than a thickness of the nano hydrophobic film in the channel. The third film-covered region may be a portion of a surface of the anti-fingerprint layer. If the thickness of the nano hydrophobic film on the third film-covered region is excessively large, quality of a functional film layer like the anti-fingerprint layer is affected. Therefore, in this embodiment, the thickness of the nano hydrophobic film on the third film-covered region is smaller than the thickness of the nano hydrophobic film in the channel, so that the fingerprint resistance and hydrophobicity of the surface of the first optical cover plate can be improved without damaging the quality of the anti-fingerprint layer.

In a possible implementation, the electronic device further includes a display module and a second optical cover plate. A mounting groove is provided in the housing, and both the display module and the second optical cover plate are disposed in the mounting groove. The display module is connected to a bottom of the mounting groove, the second optical cover plate is connected to a side that is of the display module and that is away from the bottom of the mounting groove, and a second gap exists between a side wall of the mounting groove and each of an edge of the display module and an edge of the second optical cover plate. The side wall of the mounting groove, at least a portion of the bottom of the mounting groove, at least a portion of a side surface of the display module, and at least a portion of a side surface of the second optical cover plate are the inner wall of the channel. The nano hydrophobic film in the channel continuously extends and covers at least a portion of a surface that is of the housing and that is away from the display module and the second optical cover plate, and the nano hydrophobic film in the channel continuously extends and covers at least a portion of a surface that is of the second optical cover plate and that is away from the display module. The nano hydrophobic film layer is a continuous film layer, and can cover the side surface of the display module, to isolate liquid, thereby protecting a liquid-sensitive part of the display module from a failure after being in contact with the liquid. The nano hydrophobic layer can further cover a portion of the surface of the second optical cover plate, so that fingerprint resistance of the surface of the second optical cover plate can be improved without damaging quality of an anti-fingerprint layer.

In a possible implementation, the display module is connected to the bottom of the mounting groove by using an adhesive sealing material layer, and at least a portion of a side surface of the adhesive sealing material layer is the inner wall of the channel. The bonding and sealing material may be an optical adhesive, for example, an OCA. The nano hydrophobic film is disposed on a surface that is of the OCA and that serves as the inner wall of the channel, so that liquid can be prevented from being in contact with the OCA, thereby ensuring effectiveness of the OCA.

In a possible implementation, a first through hole is provided in the housing, and the first through hole runs through the housing in a thickness direction of the electronic device. The functional component includes a third optical cover plate, a secondary microphone assembly, and a waterproof and breathable film. The third optical cover plate is disposed on a side of the housing in the thickness direction of the electronic device, a second through hole is provided in the third optical cover plate, and the second through hole is in communication with the first through hole. An inner wall of the first through hole and an inner wall of the second through hole are the inner wall of the channel. The nano hydrophobic film in the channel continuously extends and covers at least a portion of a surface that is of the third optical cover plate and that is away from the housing. The secondary microphone assembly and the waterproof and breathable film are disposed on a side that is of the housing and that is away from the third optical cover plate. One surface of the waterproof and breathable film abuts against the secondary microphone assembly, and the other surface that is of the waterproof and breathable film and that is away from the secondary microphone assembly abuts against the housing and is configured to seal an end that is of the first through hole and that is away from the third optical cover plate. The nano hydrophobic film is disposed on a surface that is of the waterproof and breathable film and that is configured to seal the first through hole. Because the second through hole is provided in the third optical cover plate, the nano hydrophobic film may be disposed on a surface that is of the third optical cover plate and that is located around the second through hole, so that liquid can be prevented from being attached near the second through hole, and fingerprint resistance of the third optical cover plate can be improved.

In a possible implementation, the nano hydrophobic film is an integrally formed continuous film layer. The continuous film layer can ensure that the liquid can be isolated at each position in the channel, thereby adequately protecting the functional component from a failure due to being in contact with the liquid.

In a possible implementation, the channel includes an opening, and the channel runs through the electronic device through the opening. In the direction in which the channel runs through the electronic device, the thickness of the nano hydrophobic film gradually decreases from an end that is of the channel and that has the opening to an end that is of the channel and that is away from the opening. Therefore, the nano hydrophobic film with a large thickness may be disposed at a position away from the functional component, to obtain good protection effect. The nano hydrophobic film with a small thickness may be disposed at a position close to the functional component, to prevent performance of the functional component from being affected by an excessively large thickness of the nano hydrophobic film.

In a possible implementation, the thickness of the nano hydrophobic film ranges from 5 nm to 150 nm.

It should be understood that the foregoing general descriptions and the following detailed descriptions are merely examples, and are not intended to limit this application.

### BRIEF DESCRIPTION OF DRAWINGS

To describe technical solutions in embodiments of this application more clearly, the following briefly describes accompanying drawings required to be used in embodiments. It is clear that the accompanying drawings in the following descriptions show merely some embodiments of this application, and a person of ordinary skill in the art may derive other drawings from these accompanying drawings without creative efforts.
FIG. 1 is a diagram of a structure of an electronic device according to an embodiment of this application;
FIG. 2 is a partial cross-sectional view (with no nano hydrophobic film disposed in a channel) taken along a line A-A in FIG. 1 according to an embodiment of this application;
FIG. 3 is a partial cross-sectional view (with a nano hydrophobic film disposed in a channel) taken along a line A-A in FIG. 1 according to another embodiment of this application;
FIG. 4 is a partial cross-sectional view taken along a line A-A in FIG. 1 according to still another embodiment of this application;
FIG. 5 is a top view of an electronic device according to an embodiment of this application;
FIG. 6 is a cross-sectional view taken along a line B-B in FIG. 5;
FIG. 7 is a cross-sectional view taken along a line C-C in FIG. 1;
FIG. 8 is a top view of an electronic device according to an embodiment of this application; and
FIG. 9 is a cross-sectional view taken along a line D-D in FIG. 8.

### Reference numerals:

1: housing;
   11: first through hole;
2: functional component;
   21: primary microphone assembly;
   22: secondary microphone assembly;
3: channel;
   31: inner side surface;
   32: bottom surface;
4: nano hydrophobic film;
   41: first hydrophobic film layer;
   42: second hydrophobic film layer;
5: waterproof and breathable film;
6: camera assembly;
   61: first optical cover plate;
   62: anti-fingerprint layer;
   63: third optical cover plate;
      631: second through hole;
7: display module;
   71: sealing material layer;
   72: mounting groove;
8: second optical cover plate;
a: first gap;
X: length direction;
Y: width direction;
Z: thickness direction.

### DESCRIPTION OF EMBODIMENTS

To better understand technical solutions of this application, the following describes embodiments of this application in detail with reference to the accompanying drawings.

It should be clear that the described embodiments are merely some rather than all of embodiments of this application. All other embodiments obtained by a person of ordinary skill in the art based on embodiments of this application without creative efforts shall fall within the protection scope of this application.

Terms used in embodiments of this application are merely for the purpose of describing specific embodiments, but are not intended to limit this application. Terms "a", "the foregoing", and "the" of singular forms used in embodiments and the appended claims of this application are also intended to include plural forms, unless otherwise specified in the context clearly.

It should be understood that a term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In descriptions of this application, unless otherwise specified and limited, the terms "first" and "second" are merely intended for a purpose of description, and should not be understood as an indication or implication of relative importance. Unless otherwise specified or stated, the term "a plurality of" means two or more than two. The terms "connection", "fastening", and the like should be understood in a broad sense. For example, the "connection" may be a fixed connection, a detachable connection, an integrated connection, or an electrical connection, or may be a direct connection, or an indirect connection through an intermediate medium. A person of ordinary skill in the art may understand specific meanings of the foregoing terms in this application based on a specific case.

An electronic device like a mobile phone has a plurality of devices that can implement different functions. Some devices are sensitive to external liquid. The external liquid may be a beverage like water, sweat, milk, or cola, a laundry detergent, or grease. These liquid contaminants may be a polar solution, for example, water, or may be a non-polar solution, for example, grease. The devices that are sensitive to the external liquid may be a microphone, a speaker, a display module, and the like. These devices may easily malfunction when being in contact with the external liquid. The electronic device like the mobile phone usually has a sound pickup hole, a fit clearance, and the like. The external liquid can enter the electronic device through the hole or the clearance and is in contact with the foregoing devices. To prevent the external liquid from entering the electronic device, in the conventional technology, a waterproof and breathable material is usually added to the sound pickup hole or the clearance to implement a waterproof function. However, it is difficult to adequately block moisture and impurities by using the waterproof and breathable material, resulting in poor effect.

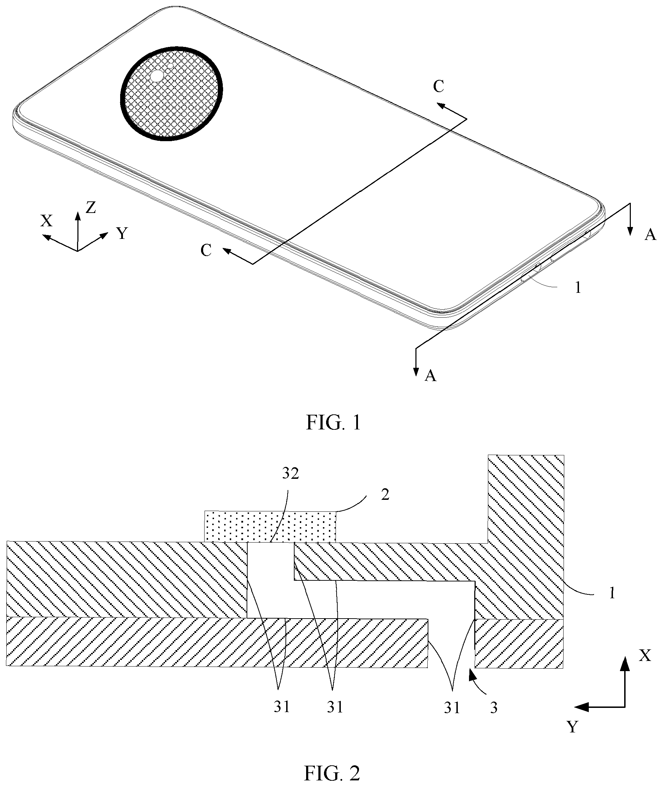

An embodiment of this application provides an electronic device. The electronic device may be a device having a waterproof requirement, such as a smartphone, a tablet computer, a notebook computer, a smart home, a smart band, a smart watch, a smart helmet, or smart glasses. A specific type of the electronic device is not limited in this application. In this embodiment, an example in which the electronic device shown in FIG. 1 is a mobile phone is used for description. The electronic device may include a plurality of functional components, and these functional components may separately implement different functions of the electronic device. For example, the functional component may be a microphone assembly, a camera assembly, a display module, a sensor, a charging module, or the like. The electronic device further includes a housing, and the housing may be one or a combination of a battery cover, a housing, a middle frame, or an internal structure rib.

FIG. 2 is a partial cross-sectional view (with no nano hydrophobic film disposed in a channel) taken along a line A-A in FIG. 1 according to an embodiment. Refer to FIG. 2. A channel 3 is provided in the electronic device. One end of the channel 3 runs through a side of the electronic device, and the other end of the channel 3 does not run through the electronic device. At least a portion of the housing 1 may constitute at least a portion of an inner wall of the channel 3, and at least a portion of the functional component 2 may constitute at least a portion of the inner wall of the channel 3. That is, the channel 3 may be formed by the housing 1 of the electronic device and the functional component 2 that is sensitive to external liquid. In an embodiment, the channel 3 may be a hole structure having a preset function, for example, a sound outlet of a speaker, a sound pickup hole of a microphone, a card tray, a charging port, a headset jack, an optical sensor opening, or a local opening of optical glass of a display. Alternatively, the channel 3 may be a fit clearance between the functional component 2 and a mechanical part, for example, a gap between a display module 7 and a battery cover, or a gap around a button. The end that is of the channel 3 and that runs through the electronic device may allow external liquid to enter, causing a problem of a function failure of the functional component 2 after being in contact with the external.

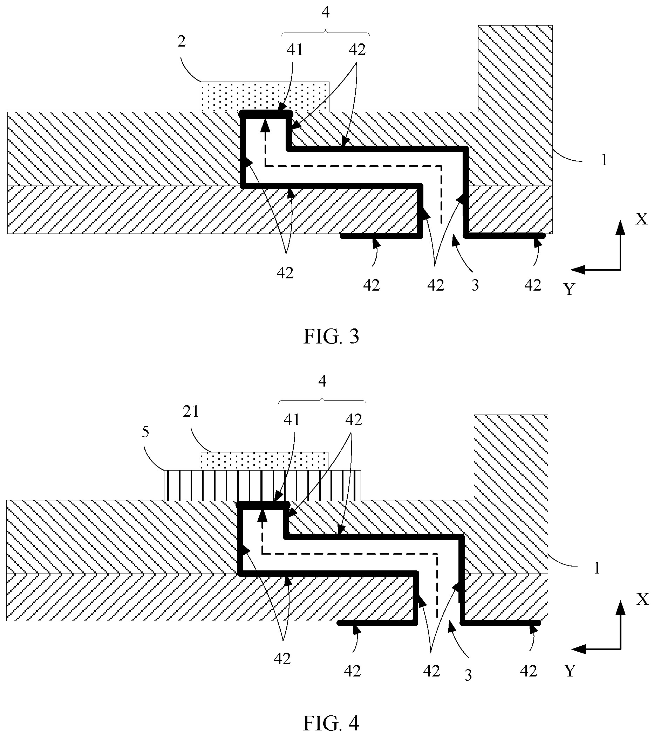

FIG. 3 is a partial cross-sectional view (with a nano hydrophobic film 4 disposed in a channel 3) taken along a line A-A in FIG. 1 according to another embodiment. Refer to FIG. 3. Therefore, in this embodiment, a nano hydrophobic film 4 is disposed on an inner wall of the channel 3. A material of the nano hydrophobic film 4 is usually a high-temperature-resistant organic compound having a hydrophobic property. A molecular structure of the organic compound is non-polar or weakly polar, and a chemical bond that constitutes the hydrophobic property does not break due to high-temperature degradation when being in contact with high-temperature plasma (for example, plasma at a temperature ranging from 120°C to 200°C). The nano hydrophobic film 4 preferably is an organic compound including fluorine F or silicon Si. The chemical bond is a C-F bond (carbon-fluorine bond), a Si-O bond (silicon-oxygen bond), a Si-CH3 bond (silicon-methyl bond), or the like. A water contact angle of the nano hydrophobic film 4 is greater than 90 degrees, and preferably may be greater than 100 degrees, so that a good hydrophobic property can be obtained. The nano hydrophobic film 4 may also have an oleophobic property at the same time. Specifically, a contact angle may be measured by using n-hexadecane, and an oil contact angle may be greater than 60 degrees.

The nano hydrophobic film 4 may cover all positions of the inner wall of the channel 3, including the surface that is of the functional component 2 and that serves as the inner wall of the channel 3. Even if external liquid enters the channel 3, the nano hydrophobic film 4 can adequately block moisture, to prevent a failure of the functional component 2 caused by direct contact between the nano hydrophobic film 4 and the functional component 2.

A larger thickness of the nano hydrophobic film indicates better protection effect. However, an excessively large thickness of the nano hydrophobic film on the functional component 2 may affect normal operation of the functional component 2. For example, the functional component 2 may include a microphone assembly. A diaphragm in the microphone assembly is sensitive to external liquid. If a thickness of the nano hydrophobic film deposited on the diaphragm is excessively large, acoustic performance of the diaphragm is affected, resulting in malfunction or failure of the microphone assembly. Therefore, in this embodiment, the thickness of the nano hydrophobic film on the functional component 2 may be less than the thickness of the nano hydrophobic film on the housing 1. This can isolate a part that is of the functional component 2 and that is sensitive to external liquid from the liquid by using the nano hydrophobic film, and prevent performance of the functional component 2 from being affected by the nano hydrophobic film.

In an embodiment, the nano hydrophobic film at all positions in the channel 3 is made of a same material, and the same material means that hydrophobic organic compounds have a same molecular chain structure. Infrared spectrometry is usually used to test infrared spectra of organic compounds. If a similarity between the infrared spectra is at least 90% and characteristic peaks match, the organic compounds can be identified as a same substance. The nanometer-level thickness of the nano hydrophobic film results in a weak signal during a test by the infrared spectrometry. For different positions of the channel 3, when substrates are of a same substance, an energy dispersive spectroscopy is used to test and analyze component elements on the surface of the nano hydrophobic film. When types of elements with a weight percentage of at least 0.5% are the same, it may be considered that the nano hydrophobic film at different positions of the channel 3 is made of a same material. The energy dispersive spectroscopy is used to test elementary composition of the nano hydrophobic film at different positions of the channel 3. If the characteristic element fluorine F or silicon Si exists on the entire surface of the nano hydrophobic film, it may also be considered that the nano hydrophobic film is made of a same material. In an embodiment, when the functional component 2 is disposed on one side of the channel 3 in a direction in which the channel 3 runs through the electronic device, that is, one end of the channel 3 has an opening and can run through the electronic device, and the other end of the channel 3 is sealed by using the functional component 2, a portion of a surface of the functional component 2 can serve as an inner wall surface of the channel 3, and the functional component 2 is away from the opening. A thickness of the nano hydrophobic film on the functional component 2 is smaller than a thickness of the nano hydrophobic film at another position in the channel 3, and a content of the foregoing characteristic element of the nano hydrophobic film located beyond the functional component 2 in the channel 3 is at least 1.5, and preferably is at least twice, a content of the foregoing characteristic element of the nano hydrophobic film on the functional component 2.

Generally, the nano hydrophobic film can be prepared by a plasma-enhanced chemical vapor deposition (Plasma-enhanced chemical vapor deposition, PECVD) process. However, in this coating manner, plasma treatment may damage an anti-fingerprint coating (Anti-Fog Coating) on the electronic device, leading to deterioration of functions such as water resistance, oil resistance, stain resistance, and prevention of fingerprint attachment of the anti-fingerprint coating. Therefore, prior to preparation of the hydrophobic film, an anti-fingerprint layer on a cover surface of a screen/lens or the like needs to be first masked with a temporary protective film, and then the electronic device like the mobile phone is placed in a PECVD cavity as a whole, to prepare the hydrophobic film with a uniform and consistent thickness in an unmasked region. However, an area of an actual masked region is usually greater than an area of a necessary masked region on the electronic device. This results in redundancy in area of an actually used material having a masking function, leading to increased costs of the material. In addition, this vacuum coating manner needs to be performed in a vacuum environment. A device used in this process is expensive, and a processing cycle usually lasts for at least several hours, resulting in excessively high manufacturing and processing costs. In addition, the prepared film layer has a uniform and consistent thickness, and a film layer of different thicknesses cannot be prepared based on requirements of different coating positions.

In this embodiment, the nano hydrophobic film may be prepared on the inner wall of the channel 3 by using an atmospheric pressure plasma coating device. Specifically, a solution including perfluorinated acrylate may be fed into the atmospheric pressure plasma coating device. A nozzle of the atmospheric pressure plasma coating device may output a gas flow that has a specific flow rate and that is a mixture of plasma and hydrophobic molecules. The gas flow may be deposited on a surface of a substrate in an atmospheric environment, to form a hydrophobic film with a nanometer-level thickness. That is, using the atmospheric pressure plasma coating device to prepare the nano hydrophobic film allows for coating in a normal temperature and atmospheric pressure environment, and the prepared nano hydrophobic film is an integrally formed continuous film layer, so that a hydrophobic material can be deposited only at a specified position. When the nano hydrophobic film is sprayed, the nozzle of the device may be aligned with a to-be-sprayed position on the electronic device, and a region corresponding to the nozzle may be sprayed with the nano hydrophobic film, but a part beyond a spraying range of the nozzle is not sprayed with the nano hydrophobic film. In addition, a process parameter of atmospheric pressure plasma coating, for example, a plasma generation power or a hydrophobic molecule spraying flow rate, is adjusted, or a spraying feeding stroke and a width range are adjusted, so that a density of the sprayed hydrophobic material may be different, and a nano hydrophobic layer with a nonuniform thickness can be formed. Alternatively, a coating thickness may be increased by increasing a quantity of times of coating. The deposition process is adjusted and optimized, so that a nano hydrophobic layer with a thickness of at least 10 nm can be prepared inside the channel 3 in a regular shape or the channel 3 in an irregular shape. For example, at a position close to a spraying center point, a thickness of the nano hydrophobic layer is large, and at a position away from the spraying center point, the thickness of the nano hydrophobic layer is small. In this way, a nano hydrophobic layer with a small thickness can be deposited on the functional component 2 away from the opening of the channel 3, which prevents the functional component 2 from being in contact with liquid, and can ensure that the performance of the functional component 2 is almost not affected by the nano hydrophobic layer.

In addition, using the atmospheric pressure plasma coating device to prepare the nano hydrophobic film allows for mutual binding of nano-sized hydrophobic molecules on the surface of the substrate with the help of plasma energy, to deposit a dry film with a nanometer-level thickness. The deposited hydrophobic material is an organosilicon polymer, a fluorine-containing organosilicon polymer, or a fluorine-containing organic polymer, and preferably is a fluorine-containing organic polymer. For a fluorine-containing organic polymer hydrophobic film, a thickness of a finally deposited film usually ranges from 5 nm to 150 nm, a water contact angle is greater than 100 degrees, and an oil contact angle is greater than 60 degrees. After 1000 friction tests, the water contact angle is still greater than 100 degrees.

The atmospheric pressure plasma coating device has a plasma nozzle, and plasma may be sprayed from the plasma nozzle to the surface of the substrate. A temperature of the plasma from the plasma nozzle is usually about 300°C. In combination with a structure design of the plasma nozzle, the temperature of the plasma can be further reduced after the plasma passes through a pipe inside the plasma nozzle. The plasma eventually needs to be in physical contact with the hydrophobic material. In this case, the temperature of the plasma is usually within a range of 120°C to 200°C, and temperature resistance of the hydrophobic material (hydrophobic molecules) needs to exceed a flame temperature of the plasma, to prevent molecular chain degradation of the hydrophobic material (hydrophobic molecules) only due to high temperature effect when being in contact with the plasma. Therefore, the temperature resistance of the hydrophobic material (hydrophobic molecules) is usually at least 120°C, preferably at least 150°C. In this embodiment, organosilicon molecules or fluorine-containing organic molecules used as the hydrophobic material usually have temperature resistance of at least 150°C, or even at least 200°C, so that the hydrophobic material does not undergo molecular chain degradation when being in contact with the plasma.

The hydrophobic molecules need to contain active functional groups, such as vinyl and alkoxy. These active functional groups are activated under an action of plasma energy, generating reactivity, for example, transforming into free radicals. The hydrophobic molecules cross-link with each other, and a corresponding organic polymer nano hydrophobic layer may be formed through layer-by-layer deposition of the molecules. Because the temperature resistance of the hydrophobic molecules is higher than 120°C, temperature resistance of the nano hydrophobic layer is not weaker than that of the hydrophobic molecules, and is also at least 120°C. The nano hydrophobic layer has good stability, and does not undergo molecular chain degradation.

In this embodiment, the nano hydrophobic film is prepared by using the atmospheric pressure plasma coating device, and sprayed gas that is in contact with the surface of the substrate is plasma-activated hydrophobic molecules, instead of high-energy plasma gas bombarding the surface of the substrate. The coating process is adjusted and controlled, to prevent a damage to an optical thin layer like an anti-fingerprint layer 62 on a surface of the electronic device in a coating process.

In addition, fluorine (F)-containing organic polymers (including fluorine (F)-modified organic polymers or fluorine (F)-modified organosilicon materials) can easily implement both hydrophobicity and oleophobicity. However, a fluorine-containing material brings a specific risk to environmental protection. Therefore, it may be considered that the fluorine-containing material is not used or the use of the fluorine-containing material is reduced in the nano hydrophobic layer. In an embodiment, the nano hydrophobic layer may be made of an organosilicon material, so that the fluorine (F)-containing material may not be used. In an embodiment, a nano oleophobic layer may be added to a surface of the organosilicon nano hydrophobic layer, to form a double-layer structure. In an embodiment, a plurality of oleophobic layers and a plurality of hydrophobic layers may be disposed. For example, one oleophobic layer is disposed on each of two surfaces of the hydrophobic layer, to form a three-layer structure. Only the oleophobic layer may be made of a fluorine (F)-containing organosilicon material, and the other layers may not include fluorine F, so that use of fluorine F can be reduced. In addition, the oleophobic layer may alternatively be made of an organosilicon material modified by a hydrophilic functional group or a polyurethane or acrylic acid material modified by a hydrophilic functional group. The hydrophilic functional group may be a polyol. Therefore, the oleophobic layer may alternatively not include fluorine F. In addition, both the nano hydrophobic layer and the nano oleophobic layer may be prepared by using the foregoing atmospheric pressure plasma coating method. Therefore, both the nano hydrophobic layer and the nano oleophobic layer have the foregoing structural form characteristics. For example, a coating thickness near the device nozzle is large, and a coating thickness away from the device nozzle is small.

In an embodiment, with reference to FIG. 2, the channel 3 may include an inner side surface 31 and a bottom surface 32. In the direction in which the channel 3 runs through the electronic device, the functional component 2 may be disposed on one side of the channel 3, and at least a portion of the functional component 2 is the bottom surface 32 of the channel 3. Refer to FIG. 3. A first hydrophobic film layer 41 is disposed on the bottom surface 32 of the channel 3, a second hydrophobic film layer 42 is disposed on the inner side surface 31 of the channel 3, and a thickness of the second hydrophobic film layer 42 is greater than a thickness of the first hydrophobic film layer 41. When a thickness of the nano hydrophobic layer is large, good protection effect can be obtained, and liquid can be adequately isolated. However, for the nano hydrophobic layer on the functional component 2, as described above, if the thickness is excessively large, the performance of the functional component 2 is affected. Therefore, in this embodiment, the first hydrophobic film layer 41 on the functional component 2 is made to be small in thickness, so that liquid can be isolated, and it can be ensured that the functional component 2 can operate normally.

In an embodiment, the thickness of the nano hydrophobic film may range from 5 nm to 150 nm. For example, the thickness of the first hydrophobic film layer 41 may be greater than or equal to 10 nm, and the thickness of the second hydrophobic film layer 42 may be greater than or equal to 30 nm. That is, the thickness of the nano hydrophobic film on the inner wall of the channel 3 is different, and the thickness of the nano hydrophobic film on the functional component 2 away from the opening of the channel 3 is small, so that a film layer of at least 10 nm can be formed. Therefore, liquid can be isolated, and it can be ensured that the functional component 2 can operate normally. The nano hydrophobic film beyond the functional component 2 has a large thickness, for example, at least 30 nm, and may have a good protection function.

In an embodiment, the channel 3 includes an opening, and the channel 3 runs through the electronic device through the opening. In a direction in which the channel 3 runs through the electronic device, the thickness of the nano hydrophobic film gradually decreases from an end that is of the channel 3 and that has the opening to an end that is of the channel 3 and that is away from the opening. Therefore, the nano hydrophobic film with a large thickness may be disposed at a position away from the functional component 2, to obtain good protection effect. The nano hydrophobic film with a small thickness may be disposed at a position close to the functional component 2, to prevent performance of the functional component 2 from being affected by an excessively large thickness of the nano hydrophobic film.

In an embodiment, with reference to FIG. 3, the channel 3 is provided in a side wall of the housing 1, and the second hydrophobic film layer 42 in the channel 3 continuously extends and covers at least a portion of a surface that is of the housing 1 and that is away from the functional component 2. Refer to FIG. 1. The electronic device includes a thickness direction Z, a width direction Y, and a length direction X, where the thickness direction Z, the width direction Y, and the length direction X are perpendicular to each other. In the width direction Y or the length direction X of the electronic device, the housing 1 includes a side wall. That is, in this embodiment, the channel 3 runs through the side wall of the housing 1 in the width direction Y or the length direction X of the housing 1, a portion of the functional component 2 located inside the housing 1 may seal the end that is of the channel 3 and that is away from the opening, and a portion of a surface of the functional component 2 may serve as the bottom surface 32 of the channel 3. The nano hydrophobic film on the inner side surface 31 and the bottom surface 32 of the channel 3 may be continuously formed, and the nano hydrophobic film on the inner side surface 31 of the channel 3 may continuously extend to an outer surface of the housing 1. The outer surface is a surface of the housing 1 on a side away from the functional component 2. There is an included angle, for example, 90 degrees, between the outer surface and the direction in which the channel 3 runs through the electronic device. In this way, there is also an included angle between the nano hydrophobic film on the outer surface and the nano hydrophobic film on the inner side surface 31 of the channel 3, so that the nano hydrophobic film that continuously extends to the outer surface of the housing 1 can block an edge of the channel 3. Therefore, liquid can be prevented from permeating into the functional component 2 from a part between the inner side surface 31 of the channel 3 and the nano hydrophobic film on the inner side surface 31 of the channel 3.

FIG. 4 is a partial cross-sectional view taken along a line A-A in FIG. 1 according to still another embodiment of this application. Refer to FIG. 4. In an embodiment, the functional component 2 includes a primary microphone assembly 21 and a waterproof and breathable film 5. One surface of the waterproof and breathable film 5 abuts against the primary microphone assembly 21, and the other surface that is of the waterproof and breathable film 5 and that is away from the primary microphone assembly 21 abuts against the housing 1 and is configured to seal an end that is of the channel 3 and that faces the primary microphone assembly 21. The nano hydrophobic film is disposed on a surface that is of the waterproof and breathable film 5 and that is configured to seal the channel 3. The waterproof and breathable film 5 has both a waterproof function and a breathable function, and can prevent most liquid from penetrating into a side at which the functional component 2 is located. The housing 1 may be a middle frame, and the channel 3 may be a sound pickup channel 3 of a primary microphone. The sound pickup channel 3 is provided in a side wall of the middle frame, and is configured to propagate sound. One end of the sound pickup channel 3 has an opening. That is, one end of the sound pickup channel 3 runs through the middle frame, and the other end that is of the sound pickup channel 3 and that is away from the opening is aligned with the primary microphone in position. The sound pickup channel 3 may be a regular straight-line-shaped channel 3, an irregular "Z"-shaped channel 3, or the like. The continuous nano hydrophobic film may be disposed on both the inner side surface 31 of the sound pickup channel 3 and the surface that is of the waterproof and breathable film 5 and that is away from the primary microphone. The nano hydrophobic film on the inner side surface 31 of the sound pickup channel 3 may alternatively continuously extend to an outer surface of the middle frame. The nano hydrophobic film can adequately isolate liquid, thereby protecting the functional component 2 from a failure due to being in contact with the liquid. A thickness of the nano hydrophobic film on the surface of the middle frame and a thickness of the nano hydrophobic film on the inner side surface 31 of the channel 3 may be both greater than the thickness of the nano hydrophobic film on the functional component 2, so that a good protection function can be obtained by using the nano hydrophobic film, and performance of the functional component 2 can be prevented from being affected by an excessively large thickness of the nano hydrophobic film.

In an embodiment, the nano hydrophobic film may be disposed on the surface that is of the waterproof and breathable film 5 and that is away from the primary microphone, and the nano hydrophobic film may also be disposed on the surface that is of the waterproof and breathable film 5 and that faces the primary microphone assembly 21, so that the liquid can be more reliably isolated, and a failure of the functional component 2 caused by contact between the liquid and the functional component 2 can be prevented. A thickness of the nano hydrophobic film on the waterproof and breathable film 5 may be greater than or equal to 10 nm, and preferably greater than or equal to 20 nm.

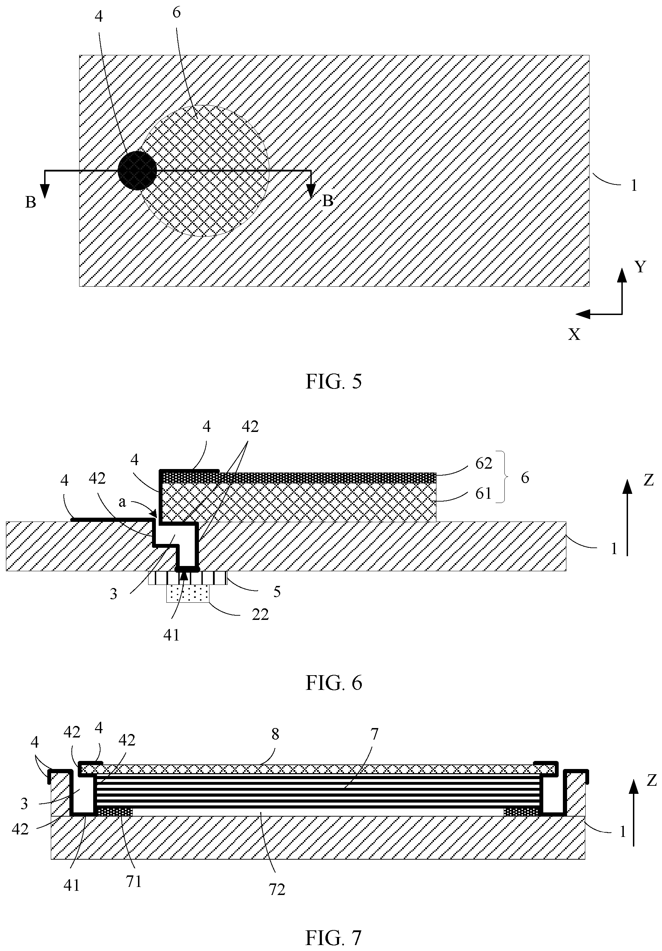

FIG. 5 is a top view of an electronic device according to an embodiment of this application. FIG. 6 is a cross-sectional view taken along a line B-B in FIG. 5. Refer to FIG. 5 and FIG. 6. In an embodiment, the housing 1 may be a battery cover, and the channel 3 that runs through the electronic device in a thickness direction Z may be provided in the battery cover. The functional component 2 may include a first optical cover plate 61, a secondary microphone assembly 22, and a waterproof and breathable film 5. The first optical cover plate 61 may be optical glass on a camera assembly 6, and the optical glass is located on an outer side of the electronic device. The first optical cover plate 61 is disposed on a side of the housing 1 in the thickness direction Z of the electronic device. At least a portion of a projection of the first optical cover plate 61 coincides with at least a portion of a projection of the channel 3, and a first gap a exists between the first optical cover plate 61 and at least a portion of an edge of the channel 3. The first optical cover plate 61 may cover most of an area of the opening of the channel 3, and only the first gap a with a small width is reserved. This ensures sound propagation and also helps hide the channel 3, thereby enhancing aesthetic appeal of the electronic device.

The channel 3 on the battery cover is a sound pickup channel 3 of the secondary microphone assembly 22. Because there is the first gap a between the first optical cover plate 61 and at least a portion of the edge of the channel 3, the sound pickup channel 3 may be in communication with external space of the electronic device through the first gap a, to implement sound propagation. In addition, the nano hydrophobic film in the channel 3 continuously extends through the first gap a and covers a surface of the housing 1 on a side close to the first optical cover plate 61, so that liquid can be prevented from being attached to the housing 1 at a position close to the channel 3, thereby preventing the liquid from entering the channel 3 through the first gap a. The secondary microphone assembly 22 and the waterproof and breathable film 5 are disposed on a side that is of the housing 1 and that is away from the first optical cover plate 61. One surface of the waterproof and breathable film 5 abuts against the secondary microphone assembly 22, and the other surface that is of the waterproof and breathable film 5 and that is away from the secondary microphone assembly 22 abuts against the housing 1 and is configured to seal an end that is of the channel 3 and that is away from the first optical cover plate 61. The nano hydrophobic film is disposed on a surface that is of the waterproof and breathable film 5 and that is configured to seal the channel 3.

A first film-covered region is provided on a surface that is of the first optical cover plate 61 and that faces the channel 3, a second film-covered region is provided on a side surface of the first optical cover plate 61, and a third film-covered region is provided on a surface that is of the first optical cover plate 61 and that is away from the housing 1. A projection of the first film-covered region, a projection of the second film-covered region, and a projection of the third film-covered region separately coincide or at least partially coincide with the projection of the channel 3 in the thickness direction Z of the electronic device. The nano hydrophobic film may be disposed on each of the first film-covered region, the second film-covered region, and the third film-covered region. The first film-covered region, the second film-covered region, and the third film-covered region are separately a portion of a surface of the first optical cover plate 61. The nano hydrophobic film on the first film-covered region, the second film-covered region, and the third film-covered region may separately cover a portion of a surface that is of the first optical cover plate 61 and that is close to the channel 3. This can prevent liquid from being attached to a position that is on the first optical cover plate 61 and that is close to the channel 3, and helps prevent the liquid from entering the channel 3. In addition, the first optical cover plate 61 has a high-gloss appearance. The nano hydrophobic film is disposed on the first optical cover plate 61, so that liquid attachment to optical glass can be prevented, thereby enhancing aesthetic appeal of the first optical cover plate 61. The nano hydrophobic film on the waterproof and breathable film 5, the inner wall surface of the channel 3, the surface of the housing 1, and the first optical cover plate 61 is a continuous film layer, and is made of a same material. As described above, the same material means that hydrophobic organic compounds have a same molecular chain structure.

In an embodiment, with reference to FIG. 6, an anti-fingerprint layer 62 is disposed on a surface that is of the first optical cover plate 61 and that is away from the housing 1, and at least a portion of the anti-fingerprint layer 62 is the third film-covered region. The anti-fingerprint layer 62 may cover the entire surface of the first optical cover plate 61, and has functions such as water resistance, oil resistance, stain resistance, and prevention of fingerprint attachment. The nano hydrophobic film is disposed on the third film-covered region of the anti-fingerprint layer 62 on a side away from the housing 1, so that fingerprint resistance of the surface of the first optical cover plate 61 can be improved without damaging quality of the anti-fingerprint layer 62.

In an embodiment, a thickness of the nano hydrophobic film on the third film-covered region is less than a thickness of the nano hydrophobic film in the channel 3. As described above, the third film-covered region may be a portion of a surface of the anti-fingerprint layer 62. If the thickness of the nano hydrophobic film on the third film-covered region is excessively large, quality of a functional film layer like the anti-fingerprint layer 62 is affected. Therefore, in this embodiment, the thickness of the nano hydrophobic film on the third film-covered region is smaller than the thickness of the nano hydrophobic film in the channel 3, so that the fingerprint resistance and hydrophobicity of the surface of the first optical cover plate 61 can be improved without damaging the quality of the anti-fingerprint layer 62.

FIG. 7 is a cross-sectional view taken along a line C-C in FIG. 1. Refer to FIG. 7. In an embodiment, the electronic device further includes a display module 7 and a second optical cover plate 8. The second optical cover plate 8 may be optical glass, and can cover a surface of the display module 7. An anti-fingerprint layer 62 may be disposed on a surface of the second optical cover plate 8, and is configured for water resistance, fingerprint prevention, and the like. The display module 7 may be a liquid crystal display (liquid crystal display, LCD), an organic light-emitting diode (organic light-emitting diode, OLED), or the like. The display module 7 has a liquid-sensitive optical film, for example, a polarizer. Different optical film layers may be bonded by an optically clear adhesive (Optically Clear Adhesive, OCA). However, when the OCA is in contact with liquid such as grease, the OCA is prone to swelling and deformation, leading to a failure of a bonding interface, and causing a malfunction or failure of the display module 7. In an actual product, there is usually an exposed optical film or OCA on a side edge of a display region of the display module 7, or a liquid-sensitive side edge like an optical film or OCA lacks adequate protective treatment measures. In a use process, external liquid may enter a gap between the display module 7 and the housing 1 of the device, and penetrate and extend to a liquid-sensitive part like the optical film or OCA, causing a malfunction or failure of the display module 7.

Therefore, in this embodiment, with reference to FIG. 7, a mounting groove 72 is provided in the housing 1, and both the display module 7 and the second optical cover plate 8 are disposed in the mounting groove 72. The display module 7 is connected to a bottom of the mounting groove 72, the second optical cover plate 8 is connected to a side that is of the display module 7 and that is away from the bottom of the mounting groove 72, and a second gap exists between a side wall of the mounting groove 72 and each of an edge of the display module 7 and an edge of the second optical cover plate 8. The second gap may be an assembly gap, and the channel 3 may be formed at the second gap. To be specific, the side wall of the mounting groove 72, at least a portion of the bottom of the mounting groove 72, at least a portion of a side surface of the display module 7, and at least a portion of a side surface of the second optical cover plate 8 are the inner wall of the channel 3. The nano hydrophobic film in the channel 3 continuously extends and covers at least a portion of a surface that is of the housing 1 and that is away from the display module 7 and the second optical cover plate 8, and the nano hydrophobic film in the channel 3 continuously extends and covers at least a portion of a surface that is of the second optical cover plate 8 and that is away from the display module 7. The nano hydrophobic film layer is a continuous film layer, and can cover the side surface of the display module 7, to isolate liquid, thereby protecting a liquid-sensitive part of the display module 7 from a failure after being in contact with the liquid. The nano hydrophobic layer can further cover a portion of the surface of the second optical cover plate 8, so that fingerprint resistance of the surface of the second optical cover plate 8 can be improved without damaging quality of the anti-fingerprint layer 62.

In an embodiment, with reference to FIG. 7, the display module 7 is connected to the bottom of the mounting groove 72 by using an adhesive sealing material layer 71, and at least a portion of a side surface of the sealing material layer 71 is the inner wall of the channel 3. The sealing material layer 71 may be an optical adhesive, for example, an OCA. The nano hydrophobic film is disposed on a surface that is of the OCA and that serves as the inner wall of the channel 3, so that liquid can be prevented from being in contact with the OCA, thereby ensuring effectiveness of the OCA.

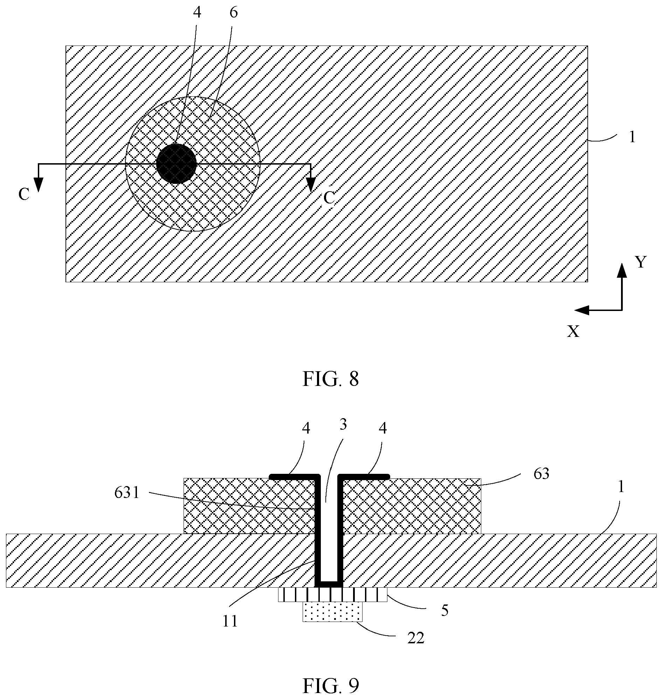

FIG. 8 is a top view of an electronic device according to an embodiment of this application. FIG. 9 is a cross-sectional view taken along a line D-D in FIG. 8. Refer to FIG. 8 and FIG. 9. In an embodiment, a first through hole 11 is provided in the housing 1. For example, the housing 1 may be a battery cover, or the housing 1 may be a combination of a battery cover and a mechanical part. The structure may be a structure located in the housing 1, and may be configured to support or mount a structural device and the like. The first through hole 11 runs through the housing 1 in a thickness direction Z of the electronic device. The functional component 2 includes a third optical cover plate 63, a secondary microphone assembly 22, and a waterproof and breathable film 5. The third optical cover plate 63 may be optical glass of a camera assembly 6. The third optical cover plate 63 is disposed on a side of the housing 1 in the thickness direction Z of the electronic device, a second through hole 631 is provided in the third optical cover plate 63, and the second through hole 631 is in communication with the first through hole 11. That is, the first through hole 11 and the second through hole 631 jointly constitute the channel 3. An inner wall of the first through hole 11 and an inner wall of the second through hole 631 are the inner wall of the channel 3, and the nano hydrophobic film is disposed on both the inner wall of the first through hole 11 and the inner wall of the second through hole 631. The nano hydrophobic film in the channel 3 may continuously extend and cover at least a portion of a surface that is of the third optical cover plate 63 and that is away from the housing 1. The secondary microphone assembly 22 and the waterproof and breathable film 5 are disposed on a side that is of the housing 1 and that is away from the third optical cover plate 63. One surface of the waterproof and breathable film 5 abuts against the secondary microphone assembly 22, and the other surface that is of the waterproof and breathable film 5 and that is away from the secondary microphone assembly 22 abuts against the housing 1 and is configured to seal an end that is of the first through hole 11 and that is away from the third optical cover plate 63. The nano hydrophobic film is disposed on a surface that is of the waterproof and breathable film 5 and that is configured to seal the first through hole 11. Because the second through hole 631 is provided in the third optical cover plate 63, the nano hydrophobic film may be disposed on a surface that is of the third optical cover plate 63 and that is located around the second through hole 631, so that liquid can be prevented from being attached near the second through hole 631, and fingerprint resistance of the third optical cover plate 63 can be improved. The nano hydrophobic film on the first through hole 11, the second through hole 631, the waterproof and breathable film 5, and the surface of the third optical cover plate 63 is a continuous film layer, and is made of a same material.

The foregoing descriptions are merely preferred embodiments of this application, and are not intended to limit this application. For a person skilled in the art, various modifications and variations may be made to this application. Any modification, equivalent replacement, improvement, or the like made without departing from the spirit and principle of this application shall fall within the protection scope of this application.

## Claims

1. An electronic device, comprising a housing and a functional component, wherein the functional component is connected to the housing, a channel is provided in the electronic device, one end of the channel runs through a side of the electronic device, at least a portion of the housing constitutes at least a portion of an inner wall of the channel, at least a portion of the functional component constitutes at least a portion of the inner wall of the channel, a nano hydrophobic film is disposed on the inner wall of the channel, a thickness of the nano hydrophobic film on the functional component is less than a thickness of the nano hydrophobic film on the housing.

2. The electronic device according to claim 1, wherein the channel comprises an inner side surface and a bottom surface, the functional component is disposed on a side of the channel in a direction in which the channel runs through the electronic device, at least a portion of the functional component is the bottom surface, a first hydrophobic film layer is disposed on the bottom surface, a second hydrophobic film layer is disposed on the inner side surface, and a thickness of the second hydrophobic film layer is greater than a thickness of the first hydrophobic film layer.

3. The electronic device according to claim 2, wherein the thickness of the first hydrophobic film layer is greater than or equal to 10 nm, and the thickness of the second hydrophobic film layer is greater than or equal to 30 nm.

4. The electronic device according to claim 2, wherein the channel is provided in a side wall of the housing, and the second hydrophobic film layer in the channel continuously extends and covers at least a portion of a surface that is of the housing and that is away from the functional component.

5. The electronic device according to claim 4, wherein the functional component comprises a primary microphone assembly and a waterproof and breathable film, one surface of the waterproof and breathable film abuts against the primary microphone assembly, the other surface that is of the waterproof and breathable film and that is away from the primary microphone assembly abuts against the housing and is configured to seal an end that is of the channel and that faces the primary microphone assembly, and the nano hydrophobic film is disposed on a surface that is of the waterproof and breathable film and that is configured to seal the channel.

6. The electronic device according to claim 5, wherein the nano hydrophobic film is disposed on a surface that is of the waterproof and breathable film and that faces the primary microphone assembly.

7. The electronic device according to claim 2, wherein the channel is provided in the housing, and the channel runs through the housing in a thickness direction of the electronic device;
the functional component comprises a first optical cover plate, a secondary microphone assembly, and a waterproof and breathable film, the first optical cover plate is disposed on a side of the housing in the thickness direction of the electronic device, at least a portion of a projection of the first optical cover plate coincides with at least a portion of a projection of the channel, a first gap exists between the first optical cover plate and at least a portion of an edge of the channel, and the nano hydrophobic film in the channel continuously extends through the first gap and covers a surface of the housing on a side close to the first optical cover plate;
a first film-covered region is provided on a surface that is of the first optical cover plate and that faces the channel, a second film-covered region is provided on a side surface of the first optical cover plate, a third film-covered region is provided on a surface that is of the first optical cover plate and that is away from the housing, and a projection of the first film-covered region, a projection of the second film-covered region, and a projection of the third film-covered region separately coincide or at least partially coincide with the projection of the channel in the thickness direction of the electronic device, and the nano hydrophobic film is disposed on each of the first film-covered region, the second film-covered region, and the third film-covered region; and
the secondary microphone assembly and the waterproof and breathable film are disposed on a side that is of the housing and that is away from the first optical cover plate, one surface of the waterproof and breathable film abuts against the secondary microphone assembly, the other surface that is of the waterproof and breathable film and that is away from the secondary microphone assembly abuts against the housing and is configured to seal an end that is of the channel and that is away from the first optical cover plate, and the nano hydrophobic film is disposed on a surface that is of the waterproof and breathable film and that is configured to seal the channel.

8. The electronic device according to claim 7, wherein an anti-fingerprint layer is disposed on a surface that is of the first optical cover plate and that is away from the housing, and at least a portion of the anti-fingerprint layer is the third film-covered region.

9. The electronic device according to claim 7, wherein a thickness of the nano hydrophobic film on the third film-covered region is less than a thickness of the nano hydrophobic film in the channel.

10. The electronic device according to claim 1, wherein the electronic device further comprises a display module and a second optical cover plate, a mounting groove is provided in the housing, both the display module and the second optical cover plate are disposed in the mounting groove, the display module is connected to a bottom of the mounting groove, the second optical cover plate is connected to a side that is of the display module and that is away from the bottom of the mounting groove, a second gap exists between a side wall of the mounting groove and each of an edge of the display module and an edge of the second optical cover plate, the side wall of the mounting groove, at least a portion of the bottom of the mounting groove, at least a portion of a side surface of the display module, and at least a portion of a side surface of the second optical cover plate are the inner wall of the channel, the nano hydrophobic film in the channel continuously extends and covers at least a portion of a surface that is of the housing and that is away from the display module and the second optical cover plate, and the nano hydrophobic film in the channel continuously extends and covers at least a portion of a surface that is of the second optical cover plate and that is away from the display module.

11. The electronic device according to claim 10, wherein the display module is connected to the bottom of the mounting groove by using an adhesive sealing material layer, and at least a portion of a side surface of the adhesive sealing material layer is the inner wall of the channel.

12. The electronic device according to claim 1, wherein a first through hole is provided in the housing, and the first through hole runs through the housing in a thickness direction of the electronic device;
the functional component comprises a third optical cover plate, a secondary microphone assembly, and a waterproof and breathable film, the third optical cover plate is disposed on a side of the housing in the thickness direction of the electronic device, a second through hole is provided in the third optical cover plate, the second through hole is in communication with the first through hole, an inner wall of the first through hole and an inner wall of the second through hole are the inner wall of the channel, and the nano hydrophobic film in the channel continuously extends and covers at least a portion of a surface that is of the third optical cover plate and that is away from the housing; and
the secondary microphone assembly and the waterproof and breathable film are disposed on a side that is of the housing and that is away from the third optical cover plate, one surface of the waterproof and breathable film abuts against the secondary microphone assembly, the other surface that is of the waterproof and breathable film and that is away from the secondary microphone assembly abuts against the housing and is configured to seal an end that is of the first through hole and that is away from the third optical cover plate, and the nano hydrophobic film is disposed on a surface that is of the waterproof and breathable film and that is configured to seal the first through hole.

13. The electronic device according to any one of claims 1 to 12, wherein the nano hydrophobic film is an integrally formed continuous film layer.

14. The electronic device according to any one of claims 1 to 13, wherein the channel comprises an opening, and the channel runs through the electronic device through the opening; and
in the direction in which the channel runs through the electronic device, the thickness of the nano hydrophobic film gradually decreases from an end that is of the channel and that has the opening to an end that is of the channel and that is away from the opening.

15. The electronic device according to any one of claims 1 to 14, wherein the thickness of the nano hydrophobic film ranges from 5 nm to 150 nm.
